# EUROPEAN PATENT APPLICATION

(11) **EP 4 701 059 A1**
(43) Date of publication of application: **25.02.2026**
(21) Application number: 24195831.3
(22) Date of filing: 22.08.2024
(51) Int. Cl.: H02M 3/00, H02M 3/335, H02M 1/34, H05B 45/385

(54) **ACTIVE CLAMP FLYBACK CONVERTER, LED DRIVER COMPRISING THE LATTER, CORRESPONDING CONTROL METHOD AND INTEGRATED CIRCUIT**

(71) Applicant: Tridonic GmbH & Co. KG, 6851 Dornbirn (AT)
(72) Inventor: Ammann, Fabian, 6851 Dornbirn (AT)
(74) Representative: Rupp, Christian

(57) **Abstract**

An active clamp flyback converter (10) for supplying an LED-based load (11) is provided. The active clamp flyback converter (10) comprises a low-side switch (12), a high-side switch (13), and a control unit (14). In this context, the control unit (14) is configured to set a respective on-time and/or off-time of the low-side switch (12) and the high-side switch (13). Additionally or alternatively, the control unit (14) is configured not to control the low-side switch (12) and the high-side switch (13) based on a switch-off event when a predefined switching threshold is reached.

## Description

The invention relates to an active clamp flyback converter for supplying an LED-based load, an LED driver comprising such an active clamp flyback converter, a method of controlling an active clamp flyback converter with a low-side switch and a high-side switch, especially such an active clamp flyback converter, for supplying an LED-based load, and an integrated circuit configured to carry out said method.

An active clamp flyback converter is a type of isolated DC/DC converter exemplarily allowing for reduced voltage spikes, improved efficiency, and enhanced electromagnetic compatibility. Typically, an active clamp flyback converter may comprise a primary side switch or low-side switch, respectively, and an active clamp switch or high-side switch, respectively. An active clamp flyback converter may further comprise a transformer, a secondary-side rectifier diode, especially for rectifying the corresponding secondary voltage, and an output filter, especially comprising inductors and/or capacitors for smoothing the corresponding output voltage.

Disadvantageously, to control the low-side switch and the high-side switch of the active clamp flyback topology, it is typically necessary to measure several variables or signals, respectively, with respect to said topology. In this context, at least three of such variables or signals, respectively, or a few more are normally measured. In addition to this, often a zero-cross-detection, which is expensive to implement, is also necessary.

Accordingly, there is the object to provide an active clamp flyback converter for supplying an LED-based load, an LED driver comprising such an active clamp flyback converter, a method of controlling an active clamp flyback converter with a low-side switch and a high-side switch, especially such an active clamp flyback converter, for supplying an LED-based load, and an integrated circuit configured to carry out said method, thereby ensuring a particularly high efficiency especially by reducing variables or signals, respectively, to be measured to a minimum.

This object is solved by the features of the first independent claim for an active clamp flyback converter for supplying an LED-based load, the features of the second independent claim for an LED driver comprising such an active clamp flyback converter, the features of the third independent claim for a method of controlling an active clamp flyback converter with a low-side switch and a high-side switch, especially such an active clamp flyback converter, for supplying an LED-based load, and the features of the fourth independent claim for an integrated circuit configured to carry out said method. The dependent claims contain further developments.

According to a first aspect of the invention, an active clamp flyback converter for supplying an LED-based load is provided. Said active clamp flyback converter comprises a low-side switch, a high-side switch, and a control unit. In this context, the control unit is configured to set a respective on-time and/or off-time of the low-side switch and the high-side switch. In addition to this or as an alternative, the control unit is configured not to control the low-side switch and the high-side switch based on a switch-off event when a predefined switching threshold is reached.

Advantageously, variables or signals, respectively, to be measured can be reduced to a minimum, thereby significantly increasing efficiency, especially cost-efficiency, and reducing complexity. Further advantageously, the active clamp flyback topology can be used as a single stage combining PFC and output stage.

According to an implementation form of the first aspect of the invention, the predefined switching threshold comprises a respective switch current with respect to the low-side switch and the high-side switch. Advantageously, for instance, complexity can further be reduced.

According to a further implementation form of the first aspect of the invention, no signal is fed back from the low-side switch and the high-side switch or from the respective area of the low-side switch and the high-side switch. Advantageously, for example, cost-efficiency can further be increased.

According to a further implementation form of the first aspect of the invention, the respective on-time and/or off-time of the low-side switch and the high-side switch is set based on a rectified input voltage with respect to the active clamp flyback converter and an output voltage with respect to the LED-based load. Advantageously, for instance, just two voltages are to be measured, thereby increasing efficiency.

According to a further implementation form of the first aspect of the invention, the control unit is configured to control the low-side switch and the high-side switch such that after the high-side switch is switched off, a dead time is introduced before the low-side switch is switched on again. Advantageously, for example, inefficiencies can further be reduced.

According to a further implementation form of the first aspect of the invention, the active clamp flyback converter further comprises a transformer, wherein the control unit is configured to calculate the respective on-time and/or off-time of the low-side switch and the high-side switch using at least one corresponding characteristic parameter of the transformer. Advantageously, for instance, flexibility can be increased, thereby increasing efficiency.

According to a further implementation form of the first aspect of the invention, the active clamp flyback converter further comprises an output capacitor for supplying the LED-based load, wherein the control unit is configured to calculate the respective on-time and/or off-time of the low-side switch and the high-side switch using a corresponding output voltage over the output capacitor. Advantageously, for example, such an output voltage can efficiently be measured.

According to a further implementation form of the first aspect of the invention, the active clamp flyback converter further comprises a rectifier, wherein the control unit is configured to calculate the respective on-time and/or off-time of the low-side switch and the high-side switch using a corresponding rectified input voltage over a corresponding output of the rectifier. Advantageously, for instance, such a rectified input voltage can efficiently be measured.

According to a further implementation form of the first aspect of the invention, the control unit is configured to calculate the respective on-time and/or off-time of the low-side switch and the high-side switch using a corresponding divider ratio with respect to the output voltage and the rectified input voltage. Advantageously, for example, complexity can be reduced.

According to a further implementation form of the first aspect of the invention, the control unit is configured to calculate the respective on-time and/or off-time of the low-side switch and the high-side switch using a scaling factor, preferably a scaling factor for an operand of the control unit, more preferably a scaling factor for a primary peak current, most preferably a scaling factor for an operand of the control unit in the form of a current or a primary peak current. Advantageously, for instance, a high flexibility can be ensured.

According to a further implementation form of the first aspect of the invention, the control unit is configured to calculate the respective on-time and/or off-time of the low-side switch and the high-side switch such that a corresponding magnetizing current of the transformer is able to decrease to zero. Advantageously, for example, efficiency can further be increased.

According to a further implementation form of the first aspect of the invention, the control unit comprises or is an ASIC or a microcontroller. Advantageously, for instance, cost-efficiency can further be increased.

According to a second aspect of the invention, an LED driver is provided. Said LED driver comprises an active clamp flyback converter according to the first aspect of the invention or any of its implementation forms, respectively, wherein the active clamp flyback converter is the only driver stage of the LED driver or there is at least one other driver stage that supplies the active clamp flyback converter or is supplied by the active clamp flyback converter.

Advantageously, variables or signals, respectively, to be measured can be reduced to a minimum, thereby significantly increasing efficiency, especially cost-efficiency, and reducing complexity. Further advantageously, the active clamp flyback topology can be used as a single stage combining PFC and output stage.

According to a third aspect of the invention, a method of controlling an active clamp flyback converter with a low-side switch and a high-side switch, especially an active clamp flyback converter according to the first aspect of the invention or any of its implementation forms, respectively, for supplying an LED-based load is provided. Said method comprises the steps of setting a respective on-time and/or off-time of the low-side switch and the high-side switch, and/or not controlling the low-side switch and the high-side switch based on a switch-off event when a predefined switching threshold is reached.

It is noted that the explanations above regarding the first aspect of the invention or its implementation forms, respectively, can analogously apply for the third aspect of the invention, and vice versa.

According to a fourth aspect of the invention, an integrated circuit configured to carry out the method according to the third aspect of the invention is provided.

Exemplary embodiments of the invention are now further explained with respect to the drawings by way of example only, and not for limitation. In the drawings:
- Fig. 1: shows an exemplary embodiment of an active clamp flyback converter; and
- Fig. 2: shows a flow chart of an embodiment of a method of controlling an active clamp flyback converter.

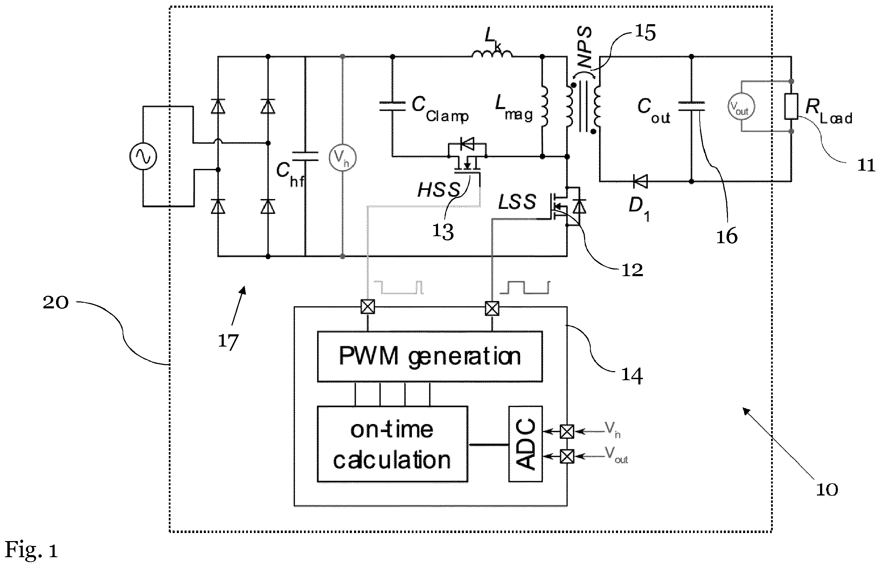

With respect to Fig. 1, an exemplary embodiment of an active clamp flyback converter 10 for supplying an LED-based load 11 is illustrated.

In accordance with said Fig. 1, the active clamp flyback converter 10 exemplarily comprises a low-side switch 12, a high-side switch 13, and a control unit 14. In this context, the control unit 14 is configured to set a respective on-time and/or off-time of the low-side switch and the high-side switch. In addition to this or as an alternative, the control unit 14 is configured not to control the low-side switch 12 and the high-side switch 13 based on a switch-off event when a predefined switching threshold is reached.

Accordingly, it might be particularly advantageous if no signal is fed back from the low-side switch 12 and the high-side switch 13 or from the respective area of the low-side switch 12 and the high-side switch 13.

With respect to the above-mentioned predefined switching threshold, it is noted that it might be particularly advantageous if the predefined switching threshold comprises a respective switch current with respect to the low-side switch 12 and the high-side switch 13.

As it can further be seen from Fig. 1, the respective on-time and/or off-time of the low-side switch 12 and the high-side switch 13 is exemplarily set based on a rectified input voltage ***Vᵢₙ*** with respect to the active clamp flyback converter 10 and an output voltage ***Vₒᵤₜ*** with respect to the LED-based load 11.

Accordingly, the control unit 14 is exemplarily configured to measure said rectified input voltage ***Vᵢₙ*** and said output voltage ***Vₒᵤₜ.***

With respect to the rectified input voltage ***Vᵢₙ*,** it is noted that said rectified input voltage ***Vᵢₙ*** exemplarily comprises or is a corresponding rectified input voltage over a corresponding output of the rectifier 17.

Furthermore, with respect to the output voltage ***Vₒᵤₜ,*** it is noted that said output voltage ***Vₒᵤₜ*** exemplarily comprises or is a corresponding output voltage over the output capacitor 16 or over the LED-based load 11, respectively.

Moreover, the control unit 14 is exemplarily configured to digitize the rectified input voltage ***Vᵢₙ*** and the output voltage ***Vₒᵤₜ.*** Further exemplarily, the control unit 14 is configured to perform a corresponding on-time calculation based on the rectified input voltage ***Vᵢₙ*** and the output voltage ***Vₒᵤₜ,*** especially based on the digitized rectified input voltage and the digitized output voltage. Further exemplarily, the control unit 14 is configured to generate a respective PWM signal for the low-side switch 12 and the high-side switch 13 based on the rectified input voltage ***Vᵢₙ*** and the output voltage ***Vₒᵤₜ,*** especially based on the on-time calculation.

It is further noted that it might be particularly advantageous if the control unit 14 is configured to control the low-side switch 12 and the high-side switch 13 such that after the high-side switch 13 is switched off, a dead time is introduced before the low-side switch 12 is switched on again.

The active clamp flyback converter 10 exemplarily further comprises a transformer 15. It might be particularly advantageous if the control unit 14 is configured to calculate the respective on-time and/or off-time of the low-side switch 12 and the high-side switch 13 using at least one corresponding characteristic parameter of the transformer 15.

For instance, said at least one corresponding characteristic parameter of the transformer 15 may comprise at least one of the corresponding turns ratio of the transformer 15 (NPS), the corresponding leakage inductance of the transformer 15 (***Lₖ***), the corresponding magnetizing inductance of the transformer 15 (***L_{mag}***), or any combination thereof.

As indicated above, the active clamp flyback converter 10 exemplarily further comprises the output capacitor 16 for supplying the LED-based load 11. In this context, the control unit 14 is exemplarily configured to calculate the respective on-time and/or off-time of the low-side switch 12 and the high-side switch 13 using the corresponding output voltage ***Vₒᵤₜ*** over the output capacitor 16 or over the LED-based load 11, respectively.

As also indicated above, the active clamp flyback converter 10 exemplarily further comprises the rectifier 17. In this context, the control unit 14 is exemplarily configured to calculate the respective on-time and/or off-time of the low-side switch 12 and the high-side switch 13 using the corresponding rectified input voltage ***Vᵢₙ*** over the corresponding output of the rectifier 17.

It is noted that it might be particularly advantageous if the control unit 14 is configured to calculate the respective on-time and/or off-time of the low-side switch 12 and the high-side switch 13 using a corresponding divider ratio with respect to the output voltage ***Vₒᵤₜ*** and the rectified input voltage ***Vᵢₙ*.**

It is further noted that it might be particularly advantageous if the control unit 14 is configured to calculate the respective on-time and/or off-time of the low-side switch 12 and the high-side switch 13 using a scaling factor, preferably a scaling factor for an operand of the control unit, more preferably a scaling factor for a primary peak current, most preferably a scaling factor for an operand of the control unit in the form of a current or a primary peak current.

In this context, it should be mentioned that the control unit 14 may comprise or implement a regulator having a current as a corresponding output value.

Furthermore, it might be particularly advantageous if the control unit 14 is configured to calculate the respective on-time and/or off-time of the low-side switch 12 and the high-side switch 13 such that a corresponding magnetizing current of the transformer 15 is able to decrease to zero.

Moreover, it might be particularly advantageous if the control unit 14 comprises or is an ASIC or a microcontroller.

Also with respect to the control unit 14, it is noted that it might be particularly advantageous if the control unit 14 is configured to combine PFC and output regulation especially in a single stage.

For the sake of completeness, it is further noted that Fig. 1 additionally illustrates an exemplary embodiment of an LED driver 20. As it can be seen, said LED driver 20 comprises the active clamp flyback converter 10, wherein the active clamp flyback converter 10 exemplarily is the only driver stage of the LED driver 20.

As an alternative, it should be mentioned that there can be at least one other driver stage that supplies the active clamp flyback converter 10 or can be supplied by the active clamp flyback converter 10.

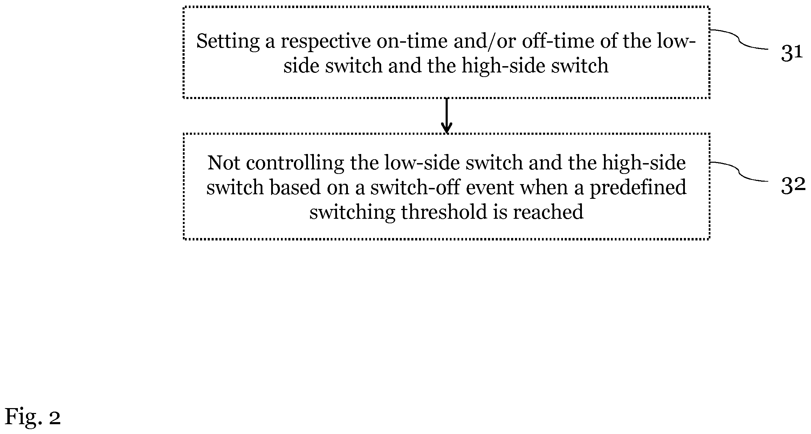

Finally, Fig. 2 illustrates a flow chart of a method of controlling an active clamp flyback converter with a low-side switch and a high-side switch, such as the above-mentioned active clamp flyback converter 10 with the low-side switch 12 and the high-side switch 13, for supplying an LED-based load, such as the above-mentioned LED-based load 11.

As it can be seen from said Fig. 2, step 31 comprises setting a respective on-time and/or off-time of the low-side switch and the high-side switch, exemplarily with the aid of the above-mentioned control unit 14. Additionally or alternatively, step 32 comprises not controlling the low-side switch and the high-side switch based on a switch-off event when a predefined switching threshold is reached, exemplarily with the aid of the above-mentioned control unit 14.

With respect to said step 32, it is noted that in other words, step 32 may comprise omitting any control of the low-side switch and the high-side switch based on a switch-off event when a predefined switching threshold is reached. Accordingly, it might be particularly advantageous if no signal is fed back from the low-side switch and the high-side switch or from the respective area of the low-side switch and the high-side switch. Thus, it might be particularly advantageous if the method comprises the step of omitting any feedback from the low-side switch and the high-side switch or from the respective area of the low-side switch and the high-side switch.

It is noted that it might be particularly advantageous if the predefined switching threshold comprises a respective switch current with respect to the low-side switch and the high-side switch.

Furthermore, the method may comprise the step of setting the respective on-time and/or off-time of the low-side switch and the high-side switch based on a rectified input voltage with respect to the active clamp flyback converter and an output voltage with respect to the LED-based load, exemplarily with the aid of the above-mentioned control unit 14.

Moreover, the method may comprise the step of controlling the low-side switch and the high-side switch such that after the high-side switch is switched off, a dead time is introduced before the low-side switch is switched on again, exemplarily with the aid of the above-mentioned control unit 14.

It is noted that it might be particularly advantageous if the method comprises the step of calculating the respective on-time and/or off-time of the low-side switch and the high-side switch using at least one corresponding characteristic parameter of a corresponding transformer of the active clamp flyback converter, such as the above-mentioned transformer 15, exemplarily with the aid of the above-mentioned control unit 14.

It is further noted that it might be particularly advantageous if the method comprises the step of calculating the respective on-time and/or off-time of the low-side switch and the high-side switch using a corresponding output voltage over a corresponding output capacitor of the active clamp flyback converter, such as the above-mentioned output capacitor 16, exemplarily with the aid of the above-mentioned control unit 14.

Furthermore, the method may comprise the step of calculating the respective on-time and/or off-time of the low-side switch and the high-side switch using a corresponding rectified input voltage over a corresponding output of a corresponding rectifier of the active clamp flyback converter, such as the above-mentioned rectifier 17, exemplarily with the aid of the above-mentioned control unit 14.

Moreover, the method may comprise the step of calculating the respective on-time and/or off-time of the low-side switch and the high-side switch using a corresponding divider ratio with respect to the output voltage and the rectified input voltage, exemplarily with the aid of the above-mentioned control unit 14.

It is further noted that the method may comprise the step of calculating the respective on-time and/or off-time of the low-side switch and the high-side switch using a scaling factor, preferably a scaling factor for an operand of the control unit, more preferably a scaling factor for a primary peak current, most preferably a scaling factor for an operand of the control unit in the form of a current or a primary peak current, exemplarily with the aid of the above-mentioned control unit 14.

In this context, it should be mentioned that the method may comprise the step of implementing a regulator having a current as a corresponding output value, exemplarily for the above-mentioned control unit 14.

Furthermore, the method may comprise the step of calculating the respective on-time and/or off-time of the low-side switch and the high-side switch such that a corresponding magnetizing current of the transformer is able to decrease to zero, exemplarily with the aid of the above-mentioned control unit 14.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. An active clamp flyback converter (10) for supplying an LED-based load (11), the active clamp flyback converter (10) comprising:
a low-side switch (12),
a high-side switch (13), and
a control unit (14),
wherein the control unit (14) is configured to set a respective on-time and/or off-time of the low-side switch (12) and the high-side switch (13), and/or
wherein the control unit (14) is configured not to control the low-side switch (12) and the high-side switch (13) based on a switch-off event when a predefined switching threshold is reached.

2. The active clamp flyback converter (10) according to claim 1,
wherein the predefined switching threshold comprises a respective switch current with respect to the low-side switch (12) and the high-side switch (13).

3. The active clamp flyback converter (10) according to claim 1 or 2,
wherein no signal is fed back from the low-side switch (12) and the high-side switch (13) or from the respective area of the low-side switch (12) and the high-side switch (13).

4. The active clamp flyback converter (10) according to any of the preceding claims,
wherein the respective on-time and/or off-time of the low-side switch (12) and the high-side switch (13) is set based on a rectified input voltage with respect to the active clamp flyback converter (10) and an output voltage with respect to the LED-based load (11).

5. The active clamp flyback converter (10) according to any of the preceding claims,
wherein the control unit (14) is configured to control the low-side switch (12) and the high-side switch (13) such that after the high-side switch (13) is switched off, a dead time is introduced before the low-side switch (12) is switched on again.

6. The active clamp flyback converter (10) according to any of the preceding claims, further comprising:
a transformer (15),
wherein the control unit (14) is configured to calculate the respective on-time and/or off-time of the low-side switch (12) and the high-side switch (13) using at least one corresponding characteristic parameter of the transformer (15).

7. The active clamp flyback converter (10) according to any of the preceding claims, further comprising:
an output capacitor (16) for supplying the LED-based load (11),
wherein the control unit (14) is configured to calculate the respective on-time and/or off-time of the low-side switch (12) and the high-side switch (13) using a corresponding output voltage over the output capacitor (16) .

8. The active clamp flyback converter (10) according to any of the preceding claims, further comprising:
a rectifier (17),
wherein the control unit (14) is configured to calculate the respective on-time and/or off-time of the low-side switch (12) and the high-side switch (13) using a corresponding rectified input voltage over a corresponding output of the rectifier (17).

9. The active clamp flyback converter (10) according to claims 7 and 8,
wherein the control unit (14) is configured to calculate the respective on-time and/or off-time of the low-side switch (12) and the high-side switch (13) using a corresponding divider ratio with respect to the output voltage and the rectified input voltage.

10. The active clamp flyback converter (10) according to any of the preceding claims,
wherein the control unit (14) is configured to calculate the respective on-time and/or off-time of the low-side switch (12) and the high-side switch (13) using a scaling factor, preferably a scaling factor for an operand of the control unit (14), more preferably a scaling factor for a primary peak current, most preferably a scaling factor for an operand of the control unit (14) in the form of a current or a primary peak current.

11. The active clamp flyback converter (10) according to any of the claims 6 to 10,
wherein the control unit (14) is configured to calculate the respective on-time and/or off-time of the low-side switch (12) and the high-side switch (13) such that a corresponding magnetizing current of the transformer (15) is able to decrease to zero.

12. The active clamp flyback converter (10) according to any of the preceding claims,
wherein the control unit (14) comprises or is an ASIC or a microcontroller.

13. An LED driver (20), comprising:
an active clamp flyback converter (10) according to any of the preceding claims,
wherein the active clamp flyback converter (10) is the only driver stage of the LED driver (20) or there is at least one other driver stage that supplies the active clamp flyback converter (10) or is supplied by the active clamp flyback converter (10).

14. A method of controlling an active clamp flyback converter with a low-side switch and a high-side switch, especially an active clamp flyback converter (10) according to any of the claims 1 to 12, for supplying an LED-based load (11), the method comprising the steps of:
setting (31) a respective on-time and/or off-time of the low-side switch and the high-side switch, and/or
not controlling (32) the low-side switch and the high-side switch based on a switch-off event when a predefined switching threshold is reached.

15. An integrated circuit configured to carry out the method according to claim 14.
